# EUROPÄISCHE PATENTSCHRIFT

(11) **EP 0 847 345 B1**
(45) Veröffentlichungstag und Bekanntmachung des Hinweises auf die Patenterteilung: **20.03.2002**
(21) Anmeldenummer: 97924888.7
(22) Anmeldetag: 15.05.1997
(51) Int. Cl.: B60S 1/08

(54) **VORRICHTUNG ZUM ERFASSEN EINER BENETZUNG EINER SCHEIBE**
DEVICE FOR DETECTING MOISTURE ON A WINDOW PANE
DISPOSITIF DE DETECTION D'HUMIDITE SUR UNE VITRE

(30) Priorität: 30.05.1996 DE 19621627
(43) Veröffentlichungstag der Anmeldung: 17.06.1998
(73) Patentinhaber: ROBERT BOSCH GMBH, 70442 Stuttgart (DE)
(72) Erfinder: BLITZKE, Henry, D-77815 Bühl (DE)
(86) Internationale Anmeldenummer: DE9700980
(87) Internationale Veröffentlichungsnummer: WO9746430

(56) Entgegenhaltungen:
- WO-A-91/09756
- WO-A-92/18359
- DE-C- 19 603 553

## Beschreibung

### Stand der Technik

Die Erfindung bezieht sich auf eine Vorrichtung zum Erfassen einer Benetzung einer Scheibe mit den im Oberbegriff des Anspruchs 1 enthaltenen Merkmalen.

Eine Vorrichtung dieser Art ist in der EP-B-0 460 180 angegeben. Bei dieser bekannten Vorrichtung werden durch Abtasten des Ausgangssignals eines Lichtempfangers in einem ersten Intervall das auftreffende Gesamtlicht aus dem Licht des Senders und aus Fremdlicht der Umgebung und in einem eng zu dem ersten Intervall in Beziehung stehenden zweiten Intervall nur das Fremdlicht erfaßt. Die Auswertestufe in Form eines Mikrocontrollers weist einen Analog/DigitalWandler und einen Zeitgeber auf. In einem Differentialverstarker wird eine Differentialsummierung vorgenommen, um ein Nutzlichtsignal zu bilden. Diese Vorrichtung zum Gewinnen des Nutzsignals ist relativ aufwendig.

### Vorteile der Erfindung

Der Erfindung liegt die Aufgabe zugrunde, eine Vorrichtung der eingangs genannten Art bereitzustellen, bei der mit einfachen Maßnahmen das Nutzlichtsignal gewonnen und die Benetzung einer Scheibe zuverlässig erfaßt wird.

Diese Aufgabe wird mit den im Anspruch 1 angegebenen Merkmalen gelöst. Hiernach ist also vorgesehen, daß die Meßschaltung eine Integrationsstufe zum Erfassen der Lichtmenge des auf den Empfänger fallenden Lichts und eine Komparatorstufe aufweist, mit der ein Auslösesignal abgebbar ist, wenn die ab einem bestimmten Zeitpunkt integrierte Lichtmenge eine vorgegebene Schwelle überschreitet, daß die aus dem Licht des Senders und eventuellem Fremdlicht bestehende Gesamtlichtmenge und die bei abgeschaltetem Sender erfaßte Fremdlichtmenge in gesonderten Zeitintervallen gemessen werden, wobei der während der Integrationszeit bis zum Eintreffen des Auslösesignals erzeugte Zählwert erfaßt wird, daß zum Ermitteln einer Größe für die Gesamtiichtmenge und für die Fremdlichtmenge bzw. für deren Änderung ein Kehrwertbildner zum Bilden der Kehrwerte der jeweiligen Zählwerte vorgesehen ist und daß die Kehrwerte dem Differenzbildner zuführbar sind.

Mittels der Integrationsstufe, beispielsweise eines Kondensators, der zu Beginn der Integrationszeit über einen elektronischen Schalter entladbar ist, und den bis zum Erreichen der Schwelle gewonnenen Zählwert können die Gesamtlichtmenge sowie die Fremdlichtmenge in getrennten Intervallen zuverlässig erfaßt werden, wobei durch die Integration und die gemeinsame Meßeinrichtung Störungen unterdrückt werden. Indem von den Zählwerten die Kehrwerte gebildet und aus der Differenz der so erhaltenen Größen für die Gesamtlichtmenge und für die Fremdlichtmenge das Nutzlichtsignal gewonnen wird, ist auch der Verarbeitungsaufwand zum Bereitstellen des Nutzlichtsignals gering.. Für die Auswerteschaltung kann z.B. ein relativ einfacher Mikrocontroller eingesetzt werden.

Zur weiteren Vereinfachung der Verarbeitungsstufen ist es vorteilhaft, daß die Gesamtlichtmenge wiederkehrend gemessen wird, während die Fremdlichtmenge anfänglich und nachfolgend nur bei Änderung der Fremdlichtmenge um einen vorgegebenen Betrag gemessen und gespeichert wird, und daß zur Ermittlung des Nutzlichtsignals die aktuell gespeicherte Fremdlichtmenge herangezogen wird. Zum Erfassen der Gesamtlichtmenge bzw, einer entsprechenden Größe wird diese wiederkehrend gemessen, so daß die von einer Benetzung herrührende Information sicher erfaßt wird, Wegen der bei den derzeitigen Benetzungssensoren verhältnismäßig guten Fremdlichtkompensation treten Fremdlichtänderungen nur gelegentlich auf. Es genügt daher, die Fremdlichtmenge einmal anfänglich bei Aktivierung der Vorrichtung zu erfassen, indem der Sender elektronisch gesteuert für das Meßintervall ausgeschaltet wird, und danach lediglich eine Messung der Fremdlichtmenge durchzuführen, wenn eine Änderung der Fremdlichtmenge um einen vorgegebenen Betrag festgestellt wird. Für die Ermittlung des Nutzlichtsignals wird die aktuelle, gespeicherte Fremdlichtmenge mit der gemessenen Gesamtlichtmenge verrechnet. Mit diesen Maßnahmen läßt sich der Rechenaufwand erheblich reduzieren, da für die Ermittlung der Fremdlichtmenge eine Vielzahl aufwendiger Divisionen vermieden wird, die z.B. bei einem üblichen Mikrocontroller 0,6 ms pro Division betragen und damit sehr zeitaufwendig sind.

Zum Erfassen einer Änderung der Fremdlichtmenge kann z.B. vorgesehen sein, daß zwischen den Kehrwertbildner und den Differenzbildner ein Komparator geschaltet ist und daß die Änderung der Fremdlichtmenge mittels des Komparators aus der Gesamtlichtmenge feststellbar ist, indem eine Änderung der Gesamtlichtmenge bezüglich eines vorgegebenen Werts erfaßt wird. Eine Änderung der Fremdlichtmenge zeigt sich in der Gesamtlichtmenge, so daß eine Änderung der Fremdlichtmenge jedenfalls sicher erfaßt wird.

Eine andere Möglichkeit, eine Änderung der Fremdlichtmenge festzustellen, besteht darin, daß der Zählwert der Fremdlichtmessung vor der aufwendigen Division überwacht wird und nur bei Überschreiten eines vorgegebenen Schwellenwerts die Division zum Erfassen der Fremdlichtmenge durchgeführt wird.

Für die Vereinfachung der Berechnung der Kehrwerte ist es weiterhin vorteilhaft, wenn vorgesehen ist, daß der Kehrwertbildner eine Gewichtung des Kehrwerts mit einem Umrechnungsfaktor in der Größenordnung zwischen 10 000 und 100 000 vornimmt.

Beispielsweise beträgt der Umrechnungsfaktor 65535, d.h, in Hexadezimaldarstellung FFFF, Dieser Faktor ist günstig für die übliche 16-Bit-Division. Auf diese Weise wird eine Komrnazahl für die jeweilige Lichtmenge vermeidbar.

Eine vorteilhafte Erfassung der Benetzung beispielsweise für die automatische Ansteuerung eines Scheibenwischers bei Regen oder auftreffendem Schmutz besteht darin, daß die Gesamtlichtmessung in Abständen von einigen Millisekunden durchgeführt wird und daß die Auflösung des Zeitgebers einigen Mikrosekunden beträgt.

Für die einfache Herleitung des Nutzlichtsignals ist weiterhin günstig, daß in der Auswerteschaltung die Änderung der Fremdlichtmenge berechenbar ist und daß das so gebildete (eigentlich aus einem Nutzlichtanteil und einem Fremdlichtanteil bestehende) Nutzlichtsignal durch Subtraktion der Änderung der Fremdlichtmenge von der Gesamtlichtmenge gebildet ist. Hierbei wird ausgenutzt, daß die Kehrwerte für die aktuelle und die vorhergehende Fremdlichtmenge in der Auswerteschaltung vorliegen.

Die Erfindung wird nachfolgend anhand eines Ausführungsbeispiels unter Bezugnahme auf die Zeichnungen näher erläutert. Es zeigen:
- Fig. 1: ein Blockschaltbild einer Vorrichtung zum Erfassung einer Benetzung einer Scheibe und
- Fig. 2: ein Beispiel für eine in Fig. 1 angegebene Meßschaltung.

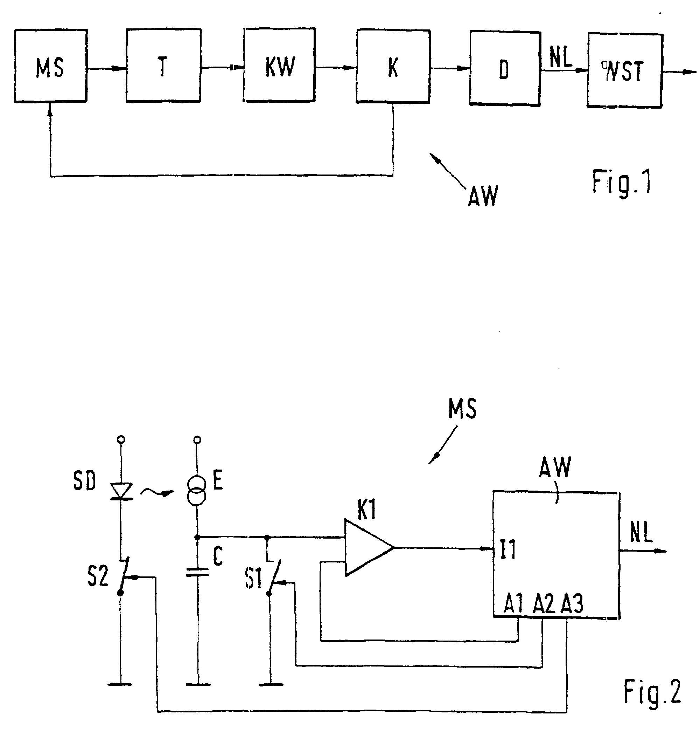

Fig. 1 zeigt ein Blockschaltbild für eine Vorrichtung zum Erfassen einer Benetzung einer Scheibe mit einem Benetzungssensor. Der Benetzungssensor weist eine Meßschaltung MS auf, an den eine Auswerteeinrichtung bzw. Auswerteschaltung mit einem Zeitgeber T, einem Kehrwertbildner KW, einem Komparator K und einem Differenzbildner D angeschlossen ist. Der Differenzbildner D gibt ein in der Auswerteschaltung AW gebildetes Nutzlichtsignal NL ab, um z. B. über eine Wischeransteuerung WST einen Scheibenwischer bei entsprechenden Benetzungsereignissen anzusteuern.

Fig. 2 zeigt ein Beispiel für die Meßschaltung MS. Mittels eines Senders in Form einer Sendediode SD wird Licht über einen optischen Weg, in den die Scheibe eingekoppelt ist, auf einen Empfänger E abgegeben. An den einen Anschluß des Empfängers ist ein Kondensator C als Integrationsstufe gegen Masse angeschlossen. Parallel zu dem Kondensator C liegt ein Schalter S1 an Masse. Zwischen dem Empfänger E und dem Kondensator C sowie an dem dort angeschlossenen Schalter S1 ist der eine Eingang einer Komparatorstufe K1 angeschlossen, dessen Ausgang mit einem Eingang 11 der Auswerteschaltung AW, beispielsweise eines Mikrocontrollers, verbunden ist. Der andere Eingang der Komparatorstufe K1 ist mit einem Ausgang A1 der Auswerteschaltung AW verbunden. Ein weiterer Ausgang der Auswerteschaltung AW ist an den Schalter S1 angeschlossen, während ein dritter Ausgang A3 der Auswerteschaltung AW an einen weiteren Schalter S2 angeschlossen ist, über den die Sendediode SD auf Masse liegt. Mit der Meßschaltung MS kann durch Steuerung des Schalters S1 von der Auswerteschaltung AW aus der Kondensator C entladen werden, so daß zu Beginn der Integrationszeit ein definierter Zustand vorliegt. Über den weiteren Schalter S2 kann die Sendediode SD zum Abgeben oder Abschalten des Lichts angesteuert werden. Über den Ausgang A1 der Auswerteschaltung AW können eine oder mehrere geeignete Schwellen für die Komparatorstufe K1 vorgegeben werden. Nähere Einzelheiten zu dieser Schaltung sind in einer parallelen Patentanmeldung angegeben, auf die verwiesen wird. Sobald das Ausgangssignal der Komparatorstufe K1 die vorgegebene Schwelle überschreitet, wird die Integrationszeit beendet. Während der Integrationszeit zählt der Zeitgeber T Impulse, wobei die Auflösung des Zeitgebers T z.B. 2µs beträgt.

Der Zählwert des Zeitgebers T wird dem Kehrwertbildner KW zugeführt. Dieser bildet den mit dem Faktor 65535, d.h. in Hexadezimaldarstellung FFFF, gewichteten Kehrwert der jeweiligen Zählwerte. Die Berechnung des Kehrwertes benötigt z.B. 0,6 ms pro Division. Durch die Multiplikation mit dem Umrechnungsfaktor 65535 werden relativ große Zahlenwerte unter Vermeidung von schlecht handhabbaren Kommazahlen erhalten. Entsprechend können andere, insbesondere mit mehr Stellen des Hexadezimalsystems darstellbare Zahlen als Umrechnungsfaktor benutzt werden.

Über den Komparator K werden die von dem Kehrwertbildner abgegebenen Werte, die der Gesamtlichtmenge einerseits und der Fremdlichtmenge andererseits entsprechen, an den Differenzbildner D weitergegeben, der die Differenz zwischen der Gesamtlichtmenge und der Fremdlichtmenge bzw. den diesen entsprechenden Größen bildet und das Nutzlichtsignal NL abgibt.

Der Komparator K vergleicht die von dem Kehrwertbildner abgegebenen Werte mit einem vorgegebenen Wert, um eine Änderung der Fremdlichtmenge beispielsweise aus einer Änderung der Gesamtlichtmenge zu erfassen.

Zu Beginn der Aktivierung der Vorrichtung wird zunächst eine Gesamtlichtmessung durchgeführt, wobei die Sendediode SD eingeschaltet ist und Licht auf den Empfänger E abgibt, wobei gleichzeitig Fremdlicht aus der Umgebung auf den Empfänger E gelangen kann. Die Gesamtlichtmenge wird in der beschriebenen Weise bis zum Erreichen der vorgegebenen Schwelle mittels des Kondensators C integriert und in der Auswerteschaltung AW zur Bildung des Nutzlichtsignals weiterverarbeitet, wie vorstehend beschrieben. Sodann wird die Sendediode SD über den weiteren Schalter S2 abgeschaltet, so daß lediglich Frerndlicht auf den Empfänger E gelangen kann. Die Fremdlichtmenge wird, nachdem der Kondensator C über den Schalter S1 entladen worden ist, in entsprechender Weise integriert und in der vorstehend beschriebenen Weise weiterverarbeitet, um die Größe für die Fremdlichtmenge zu erhalten. Anschließend werden in Abständen von z.B. 6 ms lediglich Werte für die Gesamtlichtmenge ermittelt, und das Nutzlichtsignal NL wird durch Differenzbildung zwischen der Gesamtlichtmenge und der Fremdlichtmenge bzw. den entsprechenden Größen in dem Diffrenzbildner D ermittelt. Sobald die Gesamtlichtmenge den vorgegebenen Wert des Komparators K dem Betrage nach übersteigt, wird die Sendediode SD abgeschaltet, um eine Fremdlichtmessung durchzuführen.

Auf diese Weise wird die Fremdlichtmessung lediglich bei einer Änderung der Gesamtlichtmenge durchgeführt, so daß aufwendige Divisionen zur Berechnung der Fremdlichtmenge vermieden werden können. Vielmehr bleibt eine errechnete Fremdlichtmenge solange gespeichert, bis eine neue Berechnung aufgrund einer Änderung der Gesamtlichtmenge durchgeführt wird.

Eine Änderung der Fremdlichtmenge kann alternativ auch dadurch festgestellt werden, daß Zählwerte bei der Fremdlichtmessung unmittelbar ausgewertet werden, ohne daß eine Division durchgeführt wird. Ergibt sich dabei eine Änderung des Zählwerts für die Fremdlichtmessung um einen bestimmten Betrag, so kann daraus auf eine Änderung der Fremdlichtmenge geschlossen und diese erneut unter Bildung des Kehrwerts berechnet werden.

Anstelle der Differenzbildung zwischen der Gesamtlichtmenge und der Fremdlichtmenge kann alternativ auch eine Differenzbildung zwischen der Gesamtlichtmenge und der Änderung der Fremdlichtmenge zum Herleiten des Nutzlichtsignals NL gebildet werden. Hierzu sind keine zusätzlichen Divisionen erforderlich, da der vorangegangene Wert der Fremdlichtmenge und der aktuelle Wert der Fremdlichtmenge in der Auswerteschaltung AW vorliegen.

Mit dem gewonnenen Nutzlichtsignal NL kann dann in einer weiteren Verarbeitungsstufe die Empfindlichkeit entsprechend der Fremdlichtmenge angepaßt werden oder die Auslösung eines Wischbetriebs kann unter bestimmten Bedingungen zum Vermeiden eines fehlerhaften Wischvorgangs gesperrt werden.

Die beschriebenen Maßnahmen ergeben hinsichtlich des Aufbaus und der Verarbeitung eine wesentliche Vereinfachung.

## Patentansprüche

1. Vorrichtung zum Erfassen einer Benetzung einer Scheibe mit einem Benetzungssensor, der eine Meßschaltung mit einem Licht abstrahlenden Sender (SD) und einem auf das abgestrahlte Licht ansprechenden, ein Sensorsignal abgebenden Empfänger, sowie eine, einen Differenzbildner (D), mit dem aus der Differenz zwischen Gesamtlichtmenge und Fremdlichtmenge oder aus einer Differenzbildung zwischen der Gesamtlichtmenge und der Änderung der Fremdlichtmenge ein Signal für die Nutzlichtmenge (NL) herleitbar ist, und einen Zeitgeber (T) umfassende Auswerteeinrichtung (AW) für das Sensorsignal aufweist, wobei die Auswerteeinrichtung zum Ermitteln einer Größe für die Gesamtlichtmenge und für die Fremdlichtmenge bzw. für deren Änderung ein Wertbildner zum Bilden der Werte der jeweiligen Zählwerte vorgesehen ist und wobei die Werte dem Differenzbildner zuführbar sind, **dadurch gekennzeichnet, daß** die Meßschaltung (MS) eine Integrationsstufe (C) zum Erfassen der Lichtmenge des auf den Empfänger (E) fallenden Lichts und eine Komparatorstufe (K1) aufweist, mit der ein Auslösesignal abgebbar ist, wenn die ab einem bestimmten Zeitpunkt integrierte Lichtmenge eine vorgegebene Schwelle überschreitet,
daß die aus dem Licht des Senders (SD) und eventuellem Fremdlicht bestehende Gesamtlichtmenge und die bei abgeschaltetem Sender (SD) erfaßte Fremdlichtmenge in gesonderten Zeitintervallen gemessen werden, wobei der während der Integrationszeit bis zum Eintreffen des Auslösesignals erzeugte Zählwert des Zeitgebers (T) erfaßt wird, daß zum Ermitteln einer Größe für die Gesamtlichtmenge und für die Fremdlichtmenge bzw. für deren Änderung ein Kehrwertbildner (KW) zum Bilden der Kehrwerte der jeweiligen Zählwerte vorgesehen ist und
daß die Kehrwerte dem Differenzbildner (D) zuführbar sind.

2. Vorrichtung nach Anspruch 1,
**dadurch gekennzeichnet,**
**daß** die Gesamtlichtmenge wiederkehrend gemessen wird, während die Fremdlichtmenge anfänglich und nachfolgend nur bei Änderung der Fremdlichtmenge urn einen vorgegebenen Betrag gemessen und gespeichert wird, und
**daß** zur Ermittlung des Nutzlichtsignals (NL) die aktuell gespeicherte Fremdlichtmenge herangezogen wird.

3. Vorrichtung nach Anspruch 2,
**dadurch gekennzeichnet,**
**daß** zwischen den Kehrwertbildner (KW) und den Differenzbildner (D) ein Komparator (K) geschaltet ist und
**daß** die Änderung der Fremdlichtmenge mittels des Komparators (K) aus der Gesamtlichtmenge feststellbar ist, indem eine Änderung der Gesamtlichtmenge bezüglich eines vorgegebenen Werts erfaßt wird.

4. Vorrichtung nach Anspruch 1 oder Anspruch 2,
**dadurch gekennzeichnet,**
**daß** zum Feststellen einer Änderung der Fremdlichtmenge der Zählwert der Fremdlichtmessung unmittelbar überwacht und mit einem Schwellenwert vergleichbar ist.

5. Vorrichtung nach einem der vorhergehenden Ansprüche,
**dadurch gekennzeichnet,**
**daß** der Kehrwertbildner (KW) eine Gewichtung des Kehrwerts mit einem Umrechnungsfaktor in der Größenordnung einiger Hexadezimalstellen vornimmt.

6. Vorrichtung nach Anspruch 5,
**dadurch gekennzeichnet,**
**daß** der Umrechungsfaktor 65535 beträgt.

7. Vorrichtung nach einem der vorhergehenden Ansprüche,
**dadurch gekennzeichnet,**
**daß** die Gesamtlichtmessung in Abständen von einigen Millisekunden durchgeführt wird und
**daß** die Auflösung des Zeitgebers (T) einige Mikrosekunden beträgt.

8. Vorrichtung nach einem der vorhergehenden Ansprüche,
**dadurch gekennzeichnet, dass** in der Auswerteeinrichtung (AW) die Änderung der Fremdlichtmenge berechenbar ist und
dass das Nutzlichtsignal (NL) durch Subtraktion der Änderung der Fremdlichtmenge von der Gesamtlichtmenge gebildet ist.

## Claims

1. Device for detecting wetting of a window pane, having a wetting sensor which has a measuring circuit with a light-emitting transmitter (SD) and a receiver, which responds to the emitted light and outputs a sensor signal, as well as an evaluation device (AW) for the sensor signal which comprises a difference former (D), with the aid of which it is possible to derive a signal for the quantity of useful light (NL) from the difference between the total quantity of light and the quantity of extraneous light or from a difference formed between the total quantity of light and the change in the quantity of extraneous light, and a timer (T), there being provided for the evaluation device for the purpose of determining a variable for the total quantity of light and for the quantity of extraneous light or for a change in the latter a value former for forming the values of the respective counts, and it being possible to feed the values to the difference former, **characterized in that** the measuring circuit (MS) has an integration stage (C) for detecting the quantity of the light falling onto the receiver (E), and a comparator stage (K1) with the aid of which a tripping signal can be output when the quantity of light integrated starting from a specific instant exceeds a prescribed threshold, **in that** the total quantity of light consisting of the light from the transmitter (SD) and any possible extraneous light, and the quantity of extraneous light detected with the transmitter (SD) turned off are measured in separate time intervals, the count of the timer (T) generated during the integration time up to the occurrence of the tripping signal being detected, **in that** a reciprocal former (KW) for forming the reciprocals of the respective counts is provided in order to determine a magnitude for the total quantity of light and for the quantity of extraneous light or for a change in the latter, and **in that** the reciprocals can be fed to the difference former (D).

2. Device according to Claim 1, **characterized in that** the total quantity of light is measured continuously, whereas the quantity of extraneous light is measured and stored initially and subsequently only in the event of a change in the quantity of extraneous light by a prescribed amount, and **in that** the currently stored quantity of extraneous light is used to determine the useful light signal (NL).

3. Device according to Claim 2, **characterized in that** a comparator (K) is connected between the reciprocal former (KW) and the difference former (D), and **in that** the change in the quantity of extraneous light can be established by the compurator (K) from the total quantity of light by detecting a change in the total quantity of light with reference to a prescribed value.

4. Device according to Claim 1 or Claim 2, **characterized in that** to establish a change in the quantity of extraneous light the count of the measurement of extraneous light is monitored directly and can be compared with a threshold value.

5. Device according to one of the preceding claims, **characterized in that** the reciprocal former (KW) undertakes a weighting of the reciprocal value with a conversion factor of the order of magnitude of a few hexadecimal digits.

6. Device according to Claim 5, **characterized in that** the conversion factor is 65535.

7. Device according to one of the preceding claims, **characterized in that** the total light measurement is carried out at intervals of a few milliseconds, and **in that** the resolution of the timer (T) is a few microseconds.

8. Device according to one of the preceding claims, **characterized in that** the change in the quantity of extraneous light can be calculated in the evaluation device (AW), and **in that** the useful light signal (NL) can be formed by subtracting the change in the quantity of extraneous light from the total quantity of light.

## Revendications

1. Dispositif pour détecter l'humidité d'une vitre à l'aide d'un capteur d'humidité comprenant un circuit de mesure avec un émetteur (SD) émettant de la lumière et un récepteur recevant la lumière émise et donnant un signal de capteur ainsi qu'un générateur de différence (D) qui forme un signal permettant de déduire la quantité de lumière utile (NL) à partir de la différence de la quantité totale de lumière et de la quantité de lumière étrangère ou de la différence entre la quantité totale de lumière et la variation de la quantité de lumière étrangère, ainsi qu'une horloge (T) comprenant une installation de traitement (AW) pour le signal du capteur,
l'installation de traitement comportant un générateur de valeur pour déterminer une grandeur de la quantité totale de lumière et de la quantité de lumière étrangère ou de sa variation, pour former la valeur de l'état de comptage respectif et ces valeurs sont fournies au générateur de différence,
**caractérisé en ce que**
le circuit de mesure (MS) comporte un étage d'intégration (C) pour saisir la quantité de lumière incidente dans le récepteur (E) et un étage de comparaison (KL) qui donne un signal de déclenchement si la quantité de lumière intégrée à un certain instant dépasse un seuil prédéterminé, on mesure dans des intervalles de temps particuliers la quantité totale de lumière composée de la lumière de l'émetteur (SD) et d'une éventuelle lumière étrangère, et la quantité de lumière étrangère détectée lorsque l'émetteur (SD) est coupé,
on saisit l'état de comptage de l'horloge (T) pendant le temps d'intégration jusqu'à l'arrivée du signal de déclenchement et,
pour déterminer une grandeur de la quantité totale de lumière et de la quantité de lumière étrangère ou de sa variation, il est prévu un générateur de valeur d'inversion (KW) pour former les valeurs d'inversion des états de comptage respectifs et,
les valeurs d'inversion sont fournies au générateur de différence.

2. Dispositif selon la revendication 1,
**caractérisé en ce qu'**
on mesure de manière répétée la quantité totale de lumière alors que la quantité de lumière étrangère est mesurée initialement et est mise en mémoire et ensuite elle n'est mesurée et mise en mémoire que si la quantité de lumière étrangère varie d'une valeur prédéterminée et,
pour déterminer le signal de lumière utile (NL), on utilise la quantité de lumière étrangère actuellement en mémoire.

3. Dispositif selon la revendication 2,
**caractérisé en ce qu'**
un commutateur (K) est prévu entre le générateur de valeur d'inversion (KW) et le générateur de différence (D) et,
on détermine la variation de la quantité de lumière étrangère à l'aide du comparateur (K) à partir de la quantité totale de lumière en détectant une variation de la quantité totale de lumière par rapport à une valeur prédéterminée.

4. Dispositif selon l'une quelconque des revendications 1 ou 2,
**caractérisé en ce que**
pour constater une variation de la quantité de lumière étrangère, on surveille directement l'état de comptage de la mesure de lumière étrangère et on compare à un seuil.

5. Dispositif selon l'une quelconque des revendications précédentes,
**caractérisé en ce que**
le générateur de valeur d'inversion (KW) effectue une pondération de la valeur d'inversion avec un coefficient de conversion de l'ordre de grandeur de quelques positions hexadécimales.

6. Dispositif selon la revendication 5,
**caractérisé en ce que**
le coefficient de conversion est égal à 65535.

7. Dispositif selon l'une quelconque des revendications précédentes,
**caractérisé en ce que**
l'on effectue la mesure de la quantité de lumière totale à des intervalles de quelques millisecondes, et
le déclenchement de l'horloge (T) est de quelques microsecondes;

8. Dispositif selon l'une quelconque des revendications précédentes,
**caractérisé en ce que**
dans l'installation de traitement (AW) on calcule la variation de la quantité de lumière étrangère et on forme le signal de lumière utile (NL) par soustraction de la variation de la quantité de lumière étrangère et de la quantité totale de lumière.
